# EUROPÄISCHE PATENTSCHRIFT

(11) **EP 1 608 602 B1**
(45) Veröffentlichungstag und Bekanntmachung des Hinweises auf die Patenterteilung: **07.03.2007**
(21) Anmeldenummer: 04722284.9
(22) Anmeldetag: 22.03.2004
(51) Int. Cl.: C04B 24/32, C04B 24/26, C09K 3/10

(54) **VERWENDUNG EINER VERNETZTEN POLYMERZUSAMMENSETZUNG ALS WASSSERAUFNEHMENDE KOMPONENTE IN DICHTUNGS- UND ABSORPTIONSMATERIALIEN**
USE OF A CROSS-LINKED POLYMER COMPOSITION AS A WATER-ABSORBING CONSTITUENT IN SEALING AND ABSORPTION MATERIALS
UTILISATION D'UNE COMPOSITION POLYMERE RETICULEE EN TANT QUE CONSTITUANT ABSORBANT L'EAU DANS DES MATERIAUX D'ETANCHEITE ET ABSORBANTS

(30) Priorität: 31.03.2003 DE 10314599
(43) Veröffentlichungstag der Anmeldung: 28.12.2005
(73) Patentinhaber: Mang, Thomas, 82377 Penzberg (DE)
(72) Erfinder: Mang, Thomas, 82377 Penzberg (DE)
(74) Vertreter: Wibbelmann, Jobst
(86) Internationale Anmeldenummer: PCT/EP2004/003006
(87) Internationale Veröffentlichungsnummer: WO 2004/087603

(56) Entgegenhaltungen:
- EP-A- 0 936 228
- EP-B- 0 858 478
- WO-A-99/35208
- WO-A-20/04006971

## Beschreibung

Die vorliegende Erfindung betrifft eine wasserquellende Dichtungszusammensetzung umfassend eine durch Kautschuke gebildete Matrix und ein darin verteiltes, teilchenförmiges Material mit einem Teilchendurchmesser von 5 bis 5000 µm.

### Stand der Technik

Wasseraufnehmende oder wasserquellende Polymerzusammensetzungen sind bereits seit langem bekannt.

So beschreibt die WO 99/35208 eine wasserquellende Dichtungszusammensetzung, die neben einer Matrix aus Elastomer-Komponenten darin eingelagert teilchenförmige wasseraufnehmende Materialien umfasst. Die wasseraufnehmenden Materialien werden durch teilchenförmige Materialien gebildet bei denen es sich um eine Kombination aus Polysacchariden und weiteren für Wasser hochsaugaktiven synthetischen Polymeren handelt. Diese zusätzlich verwendeten hochsaugaktiven Materialien sind Polymere in Form von stark quellendem Granulat oder Pulver. Als besonders geeignet werden lineare (Meth)acrylsäurepolymere und- copolymere mit einem gewichtsmittlerem Molekulargewicht von 5.000 bis 70.000 und quervernetzte (Meth)acrylsäurepolymere und- copolymere mit einem gewichtsmittlerem Molekulargewicht von 1.000.000 bis 5.000.000 angegeben. Die Teilchen der Kombination haben dann eine mittlere Teilchengröße von vorzugsweise 400 bis 800 µm. Die in dieser Entgegenhaltung beschriebenen wasserquellenden Dichtungszusammensetzungen eignen sich insbesondere für sogenannte vorgeformte Dichtungen, wie sie zum Abdichten von Bauwerken im Hoch-, Tief- oder Tunnelbau und im industriellen Bauwesen eingesetzt werden.

Auf der EP 0 858 478 B1 sind wasserabsorbierende, schaumförmige, vernetzte Hydrogelprodukte bekannt, die zur Verwendung als Dichtungsmaterial vorgeschlagen werden.

Die WO 00/78888 offenbart einkomponentige Dichtungsmassen, die in pastöser Form auf Bauteile aufgetragen werden können und dort zum Aushärten gebracht werden. Solche Dichtungsmassen werden im Hoch-, Tief- und Ingenieurbau eingesetzt und umfassen regelmäßig eine Matrix aus unvernetzten Silikonölen, Polysulfiden und/oder Polyurethanvorpolymeren. Der Vernetzer dient dazu, aus dem Matrixmaterial durch Vernetzungsreaktionen ein Elastomer zu bilden. Als wasserquellende bzw. wasseraufnehmende Komponente enthalten die Dichtungsmassen ein teilchenförmiges wasseraufnehmendes Material, das wiederum aus einer Kombination von Polysacchariden und Polymeren, wie zuvor beschrieben, gebildet wird.

Es besteht ganz allgemein ein großer Bedarf an Abdichtmaterial in der Bauindustrie. Die Abdichtmaterialien werden eingesetzt, um Fugen und Risse im Grundwasserbereich oder in Kanälen und Tunnels gegen eindringendes Wasser weitgehend abzudichten. Im Stand der Téchnik werden hierzu verschiedene Materialien vorgestellt, die aus Flüssigkeiten, Pasten oder Bändern bestehen. Besonders wirkungsvoll sind dabei wasserquellende Dichtmaterialien, die das eindringende Wasser aufnehmen und ihr Volumen vergrößern. Durch den in Folge der Wasseraufnahme entstehenden Quell- und Anpressdruck bleibt ein Fuge oder Riss auch nach Bewegungen, wie beispielsweise Setzungen, immer dicht verschlossen.

Ein besonderes Problem solcher wasserquellenden Abdichtmaterialien besteht darin, dass sich nicht nur eine beträchtliche Abnahme der Quelleigenschaften gegenüber elektrolythaltigem Wasser zeigt, sondern auch, dass bei wiederkehrenden Quell- und Trocknungszyklen insgesamt eine beträchtliche Abnahme der wasseraufnehmenden Eigenschaften zu beobachten ist.

Aufgabe der Erfindung war es folglich, ein polymeres Absorptionsmaterial anzugeben, das einerseits eine ausreichende Absorptionsfähigkeit gegenüber elektrolythaltigem Wasser zeigt und das auch bei wiederkehrenden Quell- und Trocknungszyklen, insbesondere bei elektrolythaltigem Wasser, seine wasseraufnehmenden bzw. wasserquellenden Eigenschaften nicht wesentlich verschlechtert.

Diese Aufgabe wird durch eine gegebenenfalls vernetzte Polymerzusammensetzung gelöst, die zumindest ein Polymer auf Basis von nichtionischen hydrophilen Acrylaten und/oder Methacrylaten enthält. Nichtionische hydrophile Acrylate und/oder Methacrylate entsprechen vorzugsweise der allgemeinen Formel: 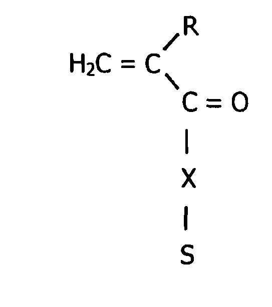 worin R = H oder eine Methylgruppe, X = 0 oder NH und S eine nichtionische Gruppe ist und hydrophile Eigenschaften vermittelt. Eine nichtionische Gruppe, die hydrophile Eigenschaften im Sinne der vorliegenden Erfindung vermittelt, ist beispielsweise eine Polyalkylenglykolkette. Eine solche Kette kann verzweigt oder linear sein und weitere Substitenten tragen. Die Kette entspricht der Formel -(CH₂CH₂O)ₘZ mit m = 3 bis 1.000 und Z = H oder C₁-C₄-Alkylrest. Besonders bevorzugt werden solche Polyalkylenglykolketten, bei denen m = 5 bis 200.

Die erfindungsgemäßen Polymere müssen nicht ausschließlich aus den nichtionischen hydrophilen Acrylaten oder Methacrylaten als Monomereinheiten aufgebaut sein, sondern können zusätzlich weitere Monomerbausteine enthalten, bei denen es sich um übliche Acrylsäureester, Acrylsäureamide und gegebenenfalls substituierte Derivate dieser (Meth)acrylsäurederivate handelt. Als Comonomere können auch Acrylsäurederivate mit ionischen funktionellen Gruppe in gewissen Mengen toleriert werden.

Erfindungsgemäß werden vorzugsweise solche Polymere bereitgestellt, bei denen die nichtionischen hydrophilen Acrylate und/oder (Meth)acrylate einen molaren Anteil von mindestens 30 % ausmachen.

Üblicherweise können die erfindungsgemäßen Polymere als lineare oder verzweigte Polymere oder Copolymere mit einem gewichtsmittleren Molekulargewicht von 50.000 bis 5.000.000 vorliegen.

Erfindungsgemäß können auch nichtionische hydrophile Acrylate oder Methacrylate eingesetzt werden, die unterschiedliche Polymerisationsgrade in der Seitenkette aufweisen.

Um den vielfältigen Anforderungen in der Praxis zu genügen, ist es üblicherweise erforderlich, die erfindungsgemäßen Polymere zu vernetzen. Als Vernetzer kommen üblicherweise hydrophile Vernetzer in Frage wie beispielsweise Diacrylate, Triacrylate, Dimethacrylate oder Trimethacrylate bzw. deren Amidderivate. Die Vernetzer werden in einer Menge von bis zu 25 Gew.-%, bevorzugt zwischen 0,01 und 10 Gew.-%, besonders bevorzugt zwischen 0,05 und 2 Gew.-%, jeweils bezogen auf die Polymerzusammensetzung (ohne Zusatzstoffe) eingesetzt. Idealerweise wird die Polymerzusammensetzung so vernetzt, dass die Acrylateinheiten über ein Ethylenglykol oder Polyethylenglykoleinheit oder einen mehrfunktionellen Alkohol, ausgewählt aus der Gruppe von Ethylenglykoldimethacrylat, Triethylenglykoldimethacrylat, Trimethylolpropantrimethacrylat, 1,3-Butylenglykol-Dimethacrylat oder N,N'-Methylenbisacrylamid miteinander verbunden sind. Besonders vorteilhafte Eigenschaften ergeben sich, wenn als Monomer Methoxypolyethylenglykolmethacrylat, Hydroxypolyethylenglykolmethacrylat, Methoxypolyethylenglykolacrylat oder Hydroxypolyethylenglykolacrylat, sowie Mischungen, insbesondere mit einer Molmasse des Polyethylenglykols von 200 bis 15.000, vorzugsweise 300 bis 6.000, eingesetzt werden.

Als Polymerisationsverfahren können die üblichen Verfahren eingesetzt werden. Vorteilhafte Verfahren sind die inverse Suspensionspolymerisation und die Polymerisation in Substanz oder Lösung. Je nach Bedarf und gewählter Methode kann mit oder ohne Lösungsmittel gearbeitet werden. Die Reaktionstemperaturen liegen üblicherweise bei 0 bis 250 °C, bevorzugt bei Temperaturen von 15 bis 150 °C. In einigen Fällen kann es vorteilhaft sein, die Reaktion in der Schmelze, d.h. mit vollständig oder teilweise geschmolzener Reaktionsmischung, durchzuführen. Das Polymerisationsprodukt kann in Form eines Gels vorliegen oder in Form eines Feststoffes. Falls ein Gel vorliegt, kann dies gegebenenfalls getrocknet und zermahlen werden.

Nach einer besonders bevorzugten Ausführungsform der vorliegenden Erfindung werden die vernetzten nichtionischen hydrophilen Polymere, wie vorstehend beschrieben, als teilchenförmiges wasseraufnehmendes oder wasserquellendes Material bereitgestellt. Die mittlere Teilchengröße beträgt üblicherweise 5 bis 5.000 µm, vorzugsweise 25 bis 1.000 µm und besonders bevorzugt 100 bis 800 µm (Durchmesser).

Das erfindungsgemäße Material kann zusätzlich weitere Bestandteile enthalten, die bei dem jeweils gewünschten Einsatzgebiet von Bedeutung sein können. Hierbei kann es sich beispielsweise um Gleitmittel, Alterungsschutzmittel, Farbstoffe, Treibmittel, Weichmacher, Vernetzungsmittel für Kautschuk, Vernetzungsbeschleuniger, Aktivatoren, Verzögerer, Vernetzungsmittel für Elastomere usw. handeln. Darüber hinaus können Füllstoffe vorliegen, wie gefällte und/oder pyrogene Kieselsäure, Silicate, Sand, Mineralmehl wie Quarz, Talkum, Glimmer, Kreide, Kaolin, Leichtspat, Kalk, Dolomit, Basalt, Kieselgur, Baryt, Feldspat, Ruße, polymerer Hohlkugelpigmente, Holz, Holzmehl, Gummimehlstaub und quellfähige anorganische Tone wie Bentonite und derivatisierte Bentonite. Darüber hinaus können Polysaccharide, insbesondere Stärke, Stärkederivate, Cellulose, Amylose, Amylopektin, Dextrane, Pektine, Inulin, Chitin, Xanthan, Alginsäure, Alginate, Caragenaan und ähnliche Verbindungen eingesetzt werden. Als Weichmacher können Mineralöl, paraffinischer, naphthenischer oder aromatischer Natur, Esterweichmacher wie Dioctylphthalat, auf Adipaten, Sebacaten basierende Esterweichmacher, Phosphorsäureester, Stearinsäure, Palmitinsäure, Rizinusöl, Baumwollsaatöl, Rapsöl, aber auch polymere Weichmacher, wie beispielsweise niedermolekulare Kautschuke verwendet werden.

Die Erfindung richtet sich auch auf die Verwendung der gegebenenfalls vernetzten Polymerzusammensetzung als Betonzusatzmittel. Die vernetzte Polymerzusammensetzung kann bei der Herstellung und Verarbeitung von Beton zugemischt werden. Dadurch lassen sich insbesondere die Fließ-, Abbinde- sowie Aushärteeigenschaften der Betonmischung besser an die Erfordernisse der Praxis anpassen. Darüber hinaus kann die vernetzte Polymerzusammensetzung auch zu Stabilisierungszwecken oder als Quellsprengmittel in Betonzubereitungen verwendet werden. Es hat sich gezeigt, dass die Polymere für den hier diskutierten Einsatzzweck auch unvernetzt vorliegen können.

Als weitere Ausführungsform der vorliegenden Erfindung wird eine wasserquellende Dichtungszusammensetzung bereitgestellt, die neben einer Matrix ein darin verteiltes, teilchenförmiges Material, wie vorstehend beschrieben, umfasst. Ein solches Dichtungsmaterial kann beispielsweise als eine vorgeformte Dichtung vorliegen, d.h. als Endlosprofil, Band oder Rundschnur. Vorzugsweise handelt es sich bei der Matrix in einem solchen Fall um ein Kautschuk oder ein Elastomer.

Als Kautschuk können Nitrilkautschuk, hydrierter Nitrilkautschuk, Ethylen-Propylen-Kautschuk, Ethylen-Propylen-Dien-Kautschuk, Copolymere aus Vinylacetat und Ethylen, sowie Terpolymere aus Ethylen, Propylen, und nicht konjugierten Dienen, natürliche Gummimischungen, Polybutadien, Polyisobutylen, Butylkautschuk, halogenierter Butylkautschuk, Copolymere aus Butadien mit einem oder mehreren polymerisierbaren, ethylenartigen ungesättigten Monomeren, wie z.B. Styrol, Acetonitril, Methylmethacrylat, Polyacrylate, Polyether und Polymere substituierter Butadiene, wie z.B. Chlorbutadien und Isopren, sowie Mischungen verschiedener Kunststoffe erwähnt werden. Die matrixbildenden Kautschuke können zusätzlich zu Elastomeren vernetzt bzw. vulkanisiert sein. Vorzugsweise besteht die Matrix aus vulkanisiertem Naturkautschuk, vulkanisiertem cis-1,4-Polyisoprenkautschuk, vulkanisiertem Polybutadien, vulkanisierten statistisch copolymerisierte-Styrol-Dienkautschuken, vulkanisiertem Acrylatkautschuk, vulkanisierten Acrylnitril-Dientkautschuken, vulkanisiertem Ethylen-Propylen-Kautschuk, vulkanisiertem Isobutylen-Isoprenkautschuk, vulkanisiertem Ethylen-Propylen-Dienkautschuk, vulkanisiertem Epichlorhydrinkautschuk, vulkanisiertem Siliconkautschuk, vulkanisiertem Polysulfidkautschuk, vernetztem Poylurethan- sowie vernetzten thermoplastischen Elastomeren.

Geeignete Vernetzungsmittel oder Vulkanisationsmittel für Kautschuk und Vernetzungsmittel für Elastomere sind die dafür üblichen, d.h. z.B. Schwefel, Schwefelverbindungen, Peroxide oder dergleichen.

Besonders vorteilhaft ist es, die erfindungsgemäßen wasserquellenden Dichtungszusammensetzungen aufzuschäumen. Dies erfolgt mittels an sich bekannter Maßnahmen, beispielsweise mit Hilfe von Treibmitteln wie Wasser, Ammoniumbicarbonat, Natriumbicarbonat oder organischen Treibmitteln, wie beispielsweise Sulfohydraziden oder Azodicarbonamiden. Es können sowohl offenporige Schäume als auch geschlossenporige Schäume hergestellt werden. Besonders bevorzugt wird eine offenporige Schaumstruktur mit einer Dichte von 0,4 bis 2 g/cm³, ganz besonders bevorzugt von etwa 0,7 g/cm³.

Im Falle von pastösen oder flüssigen Dichtungsmassen, die erst an der Luft durch Feuchtigkeit aushärten, wird die Matrix regelmäßig durch unvernetzte Silikonöle, Polysulfide und/oder Polyurethanvorpolymere gebildet. Solche Materialien härten unter Feuchtigkeitseinfluss regelmäßig zu Polymeren mit elastomeren Eigenschaften aus. Ferner kann im Fall von pastösen oder flüssigen Dichtungsmassen eine Matrix verwendet werden, die aus zwei Komponenten besteht und nach dem Vermischen der Komponenten aushärtet.

Gegenüber bekannten Polymerzusammensetzungen bzw. wasserquellenden Dichtungszusammensetzungen haben die erfindungsgemäßen Zusammensetzungen den Vorteil, dass das Quellvermögen gegenüber elektrolythaltigem Wasser, z.B. Meerwasser oder Zementwasser einerseits, und in Wasser mit sehr geringem Elektrolytgehalt, wie z.B. Regenwasser andererseits, vergleichbar sein kann. In stark salzhaltigen Wässern und besonders solchen mit mehrwertigen Ionen ist die Quellung häufig besser als mit üblichen Superabsorbern oder wasserquellenden Dichtungsmassen nach dem Stand der Technik. Für die Praxis bedeutet dies, dass die erfindungsgemäßen Zusammensetzungen mehrere Anforderungsprofile gleichzeitig erfüllen. Darüber hinaus bleibt das Quellvermögen der erfindungsgemäßen Zusammensetzung auch dann nahezu erhalten, wenn mehrere Nass-Trocken-Zyklen durchlaufen werden.

Häufig lassen sich den erfindungsgemäßen Zusammensetzungen noch bekannte Superabsorber hinzufügen.

Anhand von Untersuchungen konnte gezeigt werden, dass erfindungsgemäße Dichtungsmassen (hier sogenannte Quellgummis) nicht nur eine verbesserte Aufnahme bzw. Quellung gegenüber elektrolythaltigem Wasser, sondern auch gegenüber wiederholten Nass-Trocken-Zyklen mit elektrolythaltigem Wasser eine Beständigkeit der Quelleigenschaften zeigen.

Die verbesserte Aufnahme bzw. Quellung gegenüber elektrolythaltigem Wasser zeigt sich bereits bei sehr geringem Elektrolytgehalt, d.h. etwa bei einem Salzgehalt von unter 0,5 Gew.-%, insbesondere bei wiederholten Naß-Trocken-Zyklen. Dichtungsmassen nach dem Stand der Technik zeigen nämlich bereits nach wenigen Zyklen, insbesondere wenn das elektrolythaltige Wasser zwei- oder dreiwertige Ionen enthält, eine deutlich verschlechterte Quellfähigkeit. Bei erfindungsgemäßen Produkten zeigt sich regelmäßig eine Verbesserung hinsichtlich der Quellfähigkeiten bei wiederholten Nass-Trocken-Zyklen. Die besonderen Eigenschaften der erfindungsgemäßen Produkte findet man aber auch bereits bei einmaliger Quellung mit elektrolythaltigem Wasser, das einen besonders hohen Salzgehalt aufweist, insbesondere bei Meerwasser mit einem Elektrolytgehalt von mehr als 1 Gew.-% bis hin zu 2 oder 4 Gew.-% (überwiegend einwertige Ionen neben einem kleineren Anteil zweiwertiger Ionen). Gegenüber vielen Produkten des Standes der Technik zeigen die erfindungsgemäßen Zusammensetzungen eine verbesserte Wasseraufnahme, wenn eine Dichtungszusammensetzung in Kontakt gebracht wird mit Meerwasser.

Diese Vorteile zeigen sich ganz besonders bei geschäumten Quellgummis.

Je nach eingesetzter Menge der Füllstoffe liegt die Dichte der aufgeschäumten Quellgummis im Bereich zwischen 0.01 g/cm³ und 2.0 g/cm³. Als Füllstoffe können vor allem verwendet werden: gefällte und/oder pyrogene Kieselsäure, Silicate, Sand, Mineralmehl wie Quarz, Talkum, Glimmer, Kreide, Kaolin, Leichtspat, Kalk, Dolomit; Basalt, Kieselgur, Baryt, Feldspat, Ruße, polymerer Hohlkugelpigmente, Holz, Holzmehl, Gummimehlstaub sowie quellfähige anorganische Tone wie Bentonite und derivatisierte Bentonite. Darüber hinaus können Polysaccharide, insbesondere Stärke, Stärkederivate, Cellulose, Amylose, Amylopektin, Dextrane, Pektine, Inulin, Chitin, Xanthan, Alginsäure, Alginate, Carrageenan und ähnliche Verbindungen eingesetzt werden.

Zur Verzögerung der Aufquellung oder für andere Zwecke, wie z.B. verbesserte mechanische Eigenschaften, verbesserte Beständigkeit gegenüber Chemikalien wie z.B. organischen Lösungsmitteln, Säuren und Laugen, können auf die erfindungsgemäßen geformten Dichtungszusammensetzungen Beschichtungen aufgebracht werden. Diese Beschichtungen sind in der Regel zwischen 5 und 500 µm, bevorzugt zwischen 20 und 300 µm. Ein solcher Überzugsfilm kann auf verschiedene Weise erhalten werden. Beispielsweise durch Beschichten in einem Tauchbad oder Besprühen. In der Praxis besonders vorteilhaft sind Mehrkomponentensysteme, welche sich aus zwei oder mehr Gummis mit unterschiedlichen Eigenschaften (einschließlich Kombinationen von Gummis mit mindestens einem Quellgummi oder Kombinationen unterschiedlicher Quellgummis) zusammensetzen lassen. Mit solchen Mehrkomponentensystemen ist es beispielsweise möglich, äußerst leistungsfähige Dichtungen herzustellen. Gegenüber bekannten Quellgummizusammensetzungen haben die erfindungsgemäßen Quellgummis den Vorteil, dass das Quellvermögen gegenüber elektrolythaltigen Wasser, z.B. Meerwasser oder Zementwasser einerseits, und in Wasser mit sehr geringem Elektrolytgehalt, wie z.B. Regenwasser, vergleichbar sein kann. Diese Eigenschaft macht es möglich eine größere Menge Superabsorber in die Elastomermatrix einzuarbeiten, denn bei konventionellen Superabsorbern kann es in Folge eines zu hohen Quelldrucks zu einem Zerfall der Quellgummis bei einem sehr hohen Anteil derselben kommen.

### Beispiele zur Herstellung des teilchenförmigen Materials, das in den erfindungsgemä-ßen Dichtungszusammensetzungen zum Einsatz kommt

### Beispiel 1

### Superabsorberherstellung mit inverser Suspensionspolymerisation

In einem 250 ml-Becherglas werden 9,5 g Methoxy-Polyethylenglykol-5000-Methacrylat (MPEG-5000-MA; Röhm AG) sowie 0,5 g Hydroxyethylmethacrylat (HE-MA) und 0,5 g Ethylenglykoldimethacrylat (EGDMA) vorgelegt und dann 100 g Hydrauliköl hinzugegeben. Die Mischung wird unter Rühren mit einer Dissolverscheibe (350-500 Upm) auf 130°C erwärmt, bis das MPEG-5000-MA nach 5-10 min geschmolzen ist. Dann werden 0,4 g Azobisisobutyronitril (AIBN) zugegeben und die Mischung 2 h bei 130°C reagieren gelassen. Nach anschließendem Abkühlen wird der entstandene Niederschlag über eine Fritte abgetrennt, mehrmals mit Petrolether gewaschen und 1 Tag bei 50°C getrocknet. Es bleibt ein feinkörniges Produkt zurück.

### Beispiel 2

### Superabsorberherstellung in Substanz

100 g einer 75 %-igen wässrigen Lösung von Methoxy-Polyethylenglykol-2000-Methycrylat (MPEG-2000-MA, Bisomer S20W, Laporte) und 0,118 g Trimethylolpropantrimethacrylat (TMPTMA) sowie 2 g einer 25 %-igen Triethanolaminlösung werden in einem leeren Joghurtbecher vorgelegt. Dann werden 100 g einer frisch angesetzten 2,5 %-igen Natriumperoxodisulfat (NPS)-Lösung hinzugegeben und die Stoffe gut vermischt. Nach 60 min hat sich ein Gel gebildet, welches dem Becher entnommen wird und nach Zerreiben 2 Tage bei 50°C getrocknet wird. Das so getrocknete Produkt wird auf eine Korngröße kleiner 0,8 mm gemahlen; größere Partikel werden abgesiebt.

### Beispiel 3

### Herstellen eines Quellgummis

### a) Mischungsherstellung

Auf einem Laborwalzwerk, Hersteller: Schwabenthan, Berlin, wurde die Kautschukmischung für das Dichtungsmaterial hergestellt, wobei das Verhältnis der Drehzahlen von hinterer zu vorderer Walze (Friktion) ca. 1,2 betrug. Die vordere Walze drehte mit ca. 12 U/min; Walzentemperatur: 60 °C, Mastifikationszeit: 5-30 min.

100 Teile Naturkautschuk (SMR, Uniroyal Aachen) wurde bei einer Walzenbreite von ca. 3 mm auf die Walze gegeben. Der Walzenspalt wurde so lange verengt, bis ein zusammenhängendes Fell um die vordere Walze läuft. Zum beschleunigten Mastifizieren wurde der Kautschuk wiederholt mit einem Messer eingeschnitten. Die Mastifikation baute den Kautschuk ab und brachte damit die notwendige Konsistenz.

Nach der Mastifikation wurden 1,5 Teile Zinkoxid (aktiv), 2,5 Teile Schwefel (90 % kristallin), 0,1 Teile Dibenzothiozyldisulfid (Vulkazit DM, Bayer AG, Leverkusen), 1,2 Teile Zink-Diethyldithiocarbamat (Vulkazit LDA, Bayer AG, Leverkusen), 0,4 Teile Tetramethylthiuramdisulfid (Vulkazit Thiuram, Bayer AG, Leverkusen), 1 Teil Stearinsäure und 7,5 Teile Porofor TSH Paste (Schaumbildner, Bayer AG, Leverkusen) sowie 2 Teile Chromoxidgrün GX Standard eingemischt.

Anschließend werden zu 50 Teilen dieser Kautschukmischung 25 Teile Kartoffelstärke (Fa. Müllers Mühle) und 25 Teile Superabsorber aus Beispiel 2, die vorher vermischt wurden, in Portionen eingemischt, wobei jeweils abgewartet wurde, bis die jeweilige Kartoffelstärke-Superabsorbermenge vom Kautschuk aufgenommen war. Das Fell wird bei einem Walzenspalt von 3 mm abgezogen.

### b) Schäumen, Formen, Vernetzen

Die so gewonnenen Felle werden in ca. 1 - 1,5 cm breite Streifen geschnitten. Drei davon werden aufeinandergedrückt und in eine ca. 50 cm lange Schiene mit einem Querschnitt von 2 cm X 2 cm eingelegt. Die Form wird verschlossen und für 30 min bei 100 °C in den Ofen gelegt. Danach wird der Ofen auf 160°C (Dauer ca. 30 min) aufgeheizt. Anschließend wird die Form aus dem Ofen genommen, kurz abgekühlt und das Band aus der Form entnommen. Die so gewonnenen Abdichtbänder weisen eine Rohdichte von 0,81 g/cm³ auf. Sie weisen nach 6 Tagen eine Quellung von 130 Vol.-% in 4%-iger wässriger Kochsalzlösung und von 167 Vol.-% in gesättigter wässriger Ca(OH)₂-Lösung (10 g/l) auf und nach 14 Tagen eine Quellung von 157 Vol.-% in 4%-iger wässriger Kochsalzlösung und von 200 Vol.-% in gesättigter wässriger Ca(OH)₂-Lösung (10 g/l).

### Beispiel 4

Die nach Beispiel 3a) gewonnenen Felle werden in einen Extruder Fa. Brabender, Duisburg, eingeführt, wobei sämtliche Heizzonen und die Düse auf 80°C eingestellt sind. Die Düse hatte einen Durchmesser von 3 mm, der Zylinder von 2,1 cm. Die Schnecke wurde mit 50 U/min gedreht. Das wurstförmige Extrudat wurde im Ofen für 30 min bei 100°C geschäumt und anschließend bei 160°C vulkanisiert.

### Beispiel 5

Analog Beispiel 3 wurden Abdichtbänder hergestellt, jetzt allerdings mit 11 Teilen Kartoffelstärke und 50 Teilen Superabsorber aus Beispiel 2. Die so gewonnenen Abdichtbänder weisen eine Rohdichte von 0,75 g/cm³ auf. Sie weisen nach 4 Tagen eine Quellung von 186 Vol-% in 4 %-iger wässriger Kochsalzlösung und von 230 Vol-% in gesättigter wässriger Ca(OH)₂-Lösung (10 g/l) auf. Nach 14 Tagen weisen sie eine Quellung von 229 Vol-% in 4 %-iger wässriger Kochsalzlösung und von 300 Vol-% in gesättigter wässriger Ca(OH)₂-Lösung (10 g/l) auf. Es zeigt sich, daß durch Erhöhen des Anteils des nach Beispiel 2 hergestellten Superabsorbers unter gleichzeitigem Reduzieren des Stärkeanteils die Quellung stark erhöht werden kann. Die Reißdehnung des Abdichtmaterials liegt bei 531 %.

### Beispiel 6

25 g Hydroxyethylmethacrylat, 200 g MPEG-2000-MA, 2,5 g Etylenglykoldimethacrylat, 30 g einer wässrigen 25 %-igen Triethanolamin T85 (BASF)-Lösung, 25 g einer 40%-igen wässrigen Magnesiumacrylatlösung sowie 191,5 g Stärke werden in einem Becherglas vorgelegt. Dazu wird eine frisch angesetzte Lösung von 5 g Natriumperoxodisulfat in entionisiertem Wasser hinzugegeben und die Stoffe gut vermischt. Nach 1 h Reaktionszeit wird die Masse entnommen und bei 50°C im Umlufttrockenschrank getrocknet. Das sehr harte Material wird anschließend in der Kugelmühle auf Korngrößen unterhalb 1 mm zerkleinert.

### Beispiel 7

### a) Mischungsherstellung

Auf einem Laborwalzwerk, Hersteller: Schwabenthan, Berlin, wurde, bei einer Walzentemperatur von 70°C für die vordere Walze und 60°C für die hintere Walze, 50 g des vorher zerkleinerten EPDM-Kautschuks (Typ EPT 6250, Bayer AG) auf die Walzen gegeben und der Walzenspalt nach und nach auf 3 mm verringert, sowie der Kautschuk als Fell abgezogen. Anschließend wurden 50 g Naturkautschuk auf die Walzen gegeben, langsam erwärmt und der Walzenspalt verringert, bis sich ein Fell abziehen lässt. Sobald sich ein homogenes Fell gebildet hatte, wurden 4 g Dioctylphthalat zugetropft und anschließend der EPDM-Kautschuk portionsweise zugegeben. Dabei wird das Fell immer wieder eingeschnitten und eingeschlagen durch die Walzen geführt.

Dann wurden 1,893 g Dicumylperoxid (Merck AG), 5 g Porofor TSH (p-Toluolsulfonsäurehydrazid, Rhein Chemie Rheinbau GmbH) und 125 g des Superabsorbers aus Beispiel 6 zugemischt.

### b) Schäumen, Formen, Vernetzen

Ca. 75 g des Felles werden in einer Fläche von 14 cm x 14 cm ausgeschnitten und in eine Form mit den gleichen Maßen 14 cm x 14 cm x 0,5 cm gelegt. Die Form wird geschlossen und zwischen die Platten einer Presse gelegt. Dann wird die Kautschukmischung eine halbe Stunde bei 100°C geschäumt (bei einem Schließdruck für die Form von 100 bar) und anschließend 2 Stunden bei 160°C vulkanisiert. Nach Entnahme und Abkühlen der Form wird der geschäumte Gummi aus der Form genommen. Die so gewonnenen Quellgummis weisen eine Rohdichte von 0,5 - 0,9 g/cm³ auf, sowie hinsichtlich der Masse eine Quellung in 4 %-iger wässriger Kochsalzlösung von 132 % nach 14 Tagen. Es zeigt sich, dass beim Einmischen eines stärkehaltigen Superabsorbers auch ohne Einmischen eines Polysaccharids in die Gummimischung eine hohe Quellrate erzielt wird.

### Beispiel 8

### a) Mischungsherstellung

Auf einem Laborwalzwerk, Hersteller: Schwabenthan, Berlin, wurde bei einer Walzentemperatur von 70°C für die vordere Walze und 60°C für die hintere Walze 50 g des vorher zerkleinerten EPDM-Kautschuks (Typ EPT 6250, Bayer AG) auf die Walzen gegeben und der Walzenspalt nach und nach auf 3 mm verringert sowie der Kautschuk als Fell abgezogen. Anschließend wurden 50 g Naturkautschuk auf die Walzen gegeben, langsam erwärmt und der Walzenspalt verringert, bis sich ein Fell abziehen lässt. Sobald sich ein homogenes Fell gebildet hatte, wurden 4 g Dioctylphthalat zugetropft und anschließend der EPDM-Kautschuk portionsweise zugegeben. Dabei wird das Fell immer wieder eingeschnitten und eingeschlagen durch die Walzen geführt.

Dann wurden 1,4 g Dicumylperoxid (Merck AG), 5 g Porofor TSH (p-Toluolsulfonsäure-hydrazid, Rhein Chemie Rheinbau GmbH) und 125 g des Superabsorbers aus Beispiel 6 zugemischt.

### b) Schäumen, Formen, Vernetzen

Ca. 75 g des Felles werden in einer Fläche von 14 cm x 14 cm ausgeschnitten und in eine Form mit den gleichen Maßen 14 cm x 14 cm x 0,5 cm gelegt. Die Form wird geschlossen und zwischen die Platten einer Presse gelegt. Dann wird die Kautschukmischung eine halbe Stunde bei 100°C geschäumt bei einem Schließdruck für die Form von 100 bar und anschließend 2 Stunden bei 160°C vulkanisiert. Nach Entnahme und Abkühlen der Form wird der geschäumte Gummi aus der Form genommen. Die so gewonnenen Quellgummis weisen eine Rohdichte von 0,5 - 0,9 g/cm³ auf sowie hinsichtlich der Masse eine Quellung in 4 %-iger wässriger Kochsalzlösung von 176 % nach 4 Tagen. Es zeigt sich, dass eine geringere Vulkanisation zu einem höheren Quellgrad im Quellgummi führt.

### Beispiel 9

Analog Beispiel 3 wurden Abdichtbänder hergestellt, jetzt allerdings mit 63 Teilen Superabsorber aus Beispiel 2 und ohne Stärke. Die so gewonnenen Abdichtbänder weisen eine Rohdichte von 0,84 g/cm³ auf. Sie weisen nach 5 Tagen eine Quellung von 400 Vol.-% in entionisiertem Wasser, von 300 Vol.-% in Meerwasser nach ASTM D 1141-98 und von 375 Vol.-% in gesättigter wässriger Ca(OH)₂-Lösung (10 g/l) auf. Es zeigt sich, dass die so gewonnenen Abdichtbänder in Medien mit sehr unterschiedlichem Elektrolytgehalt ähnliche Quellraten aufweisen. Ferner werden durch das Weglassen der Stärke und die damit mögliche starke Erhöhung des Superabsorbers aus Beispiel 2 in kurzer Zeit extrem hohe Quellraten in elektrolythaltigen Wässern erreicht.

## Patentansprüche

1. Wasserquellende Dichtungszusammensetzung umfassend eine durch Kautschuke gebildete Matrix und ein darin verteiltes teilchenförmiges Material mit einem Teilchendurchmesser von 5 bis 5000 µm,
wobei das Material eine vernetzte Polymerzusammensetzung umfasst, die zumindest ein Polymer enthält, bei dem der Anteil der von nichtionischen hydrophilen Acrylaten oder Methacrylaten abgeleiteten Monomereinheiten mindestens 30 Mol-% ausmacht, wobei die nichtionischen hydrophilen Acrylate oder Methacrylate der allgemeinen Formel 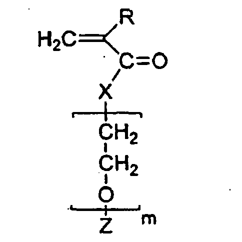 entsprechen, worin R = H oder eine Methylgruppe, X = O oder NH, m = 3 bis 1.000 und Z = H oder C₁-C₄-Alkylrest entspricht

2. Dichtungszusammensetzung nach Anspruch 1, wobei der Kautschuk zu einem Elastomer bzw. Gummi vulkanisiert oder vernetzt ist.

3. Dichtungszusammensetzung gemäß Anspruch 1 oder 2, wobei m = 5 bis 200.

4. Dichtungszusammensetzung gemäß eines beliebigen der Ansprüche 1 bis 3, wobei eine offenporige Schaumstruktur mit einer Dichte von 0,4 bis 2 g/cm³ vorliegt.

5. Dichtungszusammensetzung gemäß eines beliebigen der Ansprüche 1 bis 4, wobei das Material eine mittlere Teilchengröße von 100 bis 800 µm aufweist.

6. Verwendung einer wasserquellenden Dichtungszusammensetzung gemäß eines beliebigen der voranstehenden Ansprüche als Dichtungs- und Absorptionsmaterial gegenüber elektrolythaltigem Wasser bei wiederholten Nass-Trocken-Zyklen.

## Claims

1. Water-swellable sealing composition comprising a matrix formed by rubbers and a particulate material having a particle diameter of from 5 to 5,000 µm distributed therein,
wherein the material comprises a crosslinked polymer composition which comprises at least one polymer in which the content of monomer units derived from nonionic hydrophilic acrylates or methacrylates makes up at least 30 mol%, wherein the nonionic hydrophilic acrylates or methacrylates correspond to the general formula 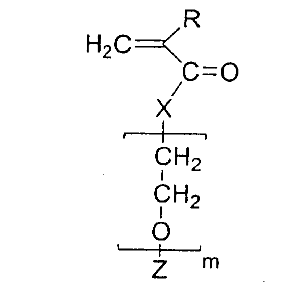 wherein R = H or a methyl group, X = O or NH, m = 3 to 1,000 and Z = H or a C₁-C₄-alkyl radical.

2. Sealing composition according to claim 1, wherein the rubber is vulcanized or crosslinked to form an elastomer or vulcanized rubber.

3. Sealing composition according to claim 1 or 2, wherein m = 5 to 200.

4. Sealing composition according to any one of claims 1 to 3, wherein an open-pore foam structure having a density of from 0.4 to 2 g/cm³ is present.

5. Sealing composition according to any one of claims 1 to 4, wherein the material has an average particle size of from 100 to 800 µm.

6. Use of a water-swellable sealing composition according to any one of the preceding claims as a sealing and absorption material with respect to electrolyte-containing water during repeated wet-dry cycles.

## Revendications

1. Composition d'étanchéité gonflant à l'eau comprenant une matrice formée par des caoutchoucs et un matériau en forme de particule, réparti à l'intérieur, avec un diamètre de particule allant de 5 à 5 000 µm,
le matériau comprenant une composition polymère réticulée qui contient au moins un polymère, dans lequel la fraction des unités monomères dérivées d'acrylates ou de méthacrylates hydrophiles non ioniques représente au moins 30 % de mole, les acrylates ou méthacrylates hydrophiles non ioniques correspondant à la formule générale suivante : 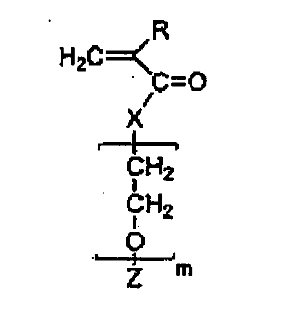 dans laquelle R = H ou un groupe méthyle, X = O ou NH, m = 3 jusqu'à 1 000 et Z = H ou correspondant à un groupe alkyle en C₁-C₄.

2. Composition d'étanchéité selon la revendication 1, dans laquelle le caoutchouc est vulcanisé ou réticulé pour former un élastomère ou un caoutchouc.

3. Composition d'étanchéité selon la revendication 1 ou 2, dans laquelle m = 5 jusqu'à 200.

4. Composition d'étanchéité selon l'une quelconque des revendications 1 à 3, dans laquelle une structure de mousse à pores ouverts avec une étanchéité de 0,4 à 2 g/cm³ est présente.

5. Composition d'étanchéité selon l'une quelconque des revendications 1 à 4, dans laquelle le matériau présente une grandeur de particule moyenne allant de 100 jusqu'à 800 µm.

6. Utilisation d'une composition d'étanchéité gonflant à l'eau selon l'une quelconque des revendications précédentes comme matériau d'étanchéité et d'absorption par rapport à de l'eau à base d'électrolyte dans le cas de cycles humide-sec répétés.
